# EUROPÄISCHE PATENTSCHRIFT

(11) **EP 2 511 648 B1**
(45) Veröffentlichungstag und Bekanntmachung des Hinweises auf die Patenterteilung: **07.12.2016**
(21) Anmeldenummer: 12163962.9
(22) Anmeldetag: 12.04.2012
(51) Int. Cl.: G01B 5/06, G01B 11/02, G01B 11/24, H01R 43/048

(54) **Messanordnung und Verfahren zur Bestimmung mindestens der Crimphöhe eines Leitercrimps**
Measuring assembly and method for determining at least the crimp height of one conductor crimp
Agencement de mesure et procédé de détermination d'au moins une hauteur de sertissage d'un sertissage de conducteur

(30) Priorität: 12.04.2011 EP 11162082
(43) Veröffentlichungstag der Anmeldung: 17.10.2012
(73) Patentinhaber: Komax Holding AG, 6036 Dierikon (CH)
(72) Erfinder: Viviroli, Stefan, 6048 Horw (CH)
(74) Vertreter: Inventio AG

(56) Entgegenhaltungen:
- EP-A1- 1 780 846
- WO-A1-2010/150684
- US-A- 4 908 951
- US-A- 5 615 489
- US-A1- 2007 218 749

## Beschreibung

Die Erfindung betrifft eine Messanordnung zur Bestimmung mindestens der Crimphöhe eines Leitercrimps eines Crimpkontakts.

Unter Crimpen versteht man die Herstellung einer nicht lösbaren elektrischen und mechanischen Verbindung zwischen einem Leiter und einem Kontakt. Dabei ist die Crimphöhe des Leitercrimps ein zentrales Kriterium zur Beurteilung der Qualität der Crimpverbindung. Aufgrund der Querschnittsform des Leitercrimps wird die Crimphöhe als Abstand zwischen einer Messspitze und einer Messschneide ermittelt. Die Crimphöhe wird häufig manuell an der Kabelbearbeitungsmaschine oder an einem speziellen Messplatz gemessen, beispielsweise mit einem Mikrometer oder einer mit einer digitalen Messuhr ausgestatteten Messvorrichtung.

Die Genauigkeit einer solchen Messung ist ausreichend, in der Praxis aber meist begrenzt durch Bedienungsfehler oder bewusste Manipulationen des Bedieners. Deshalb kann die geforderte Messgenauigkeit oft nicht verlässlich erreicht werden. Beispielsweise kann der Bediener an einem falschen Ort messen oder den Kontakt schräg in die Messvorrichtung halten. Die zunehmende Miniaturisierung erschwert das Durchführen einer korrekten Messung zusätzlich. Es ist für den Bediener auch schwierig, Fehlmessungen als solche zu erkennen.

Neben den Vorrichtungen zur manuellen Messung der Crimphöhe existieren auch Lösungen für die automatische Messung, bei denen das Kabel durch die Maschine zur Messvorrichtung gebracht wird.

Aus der Patentschrift EP 1 780 846 B1 ist eine Messeinrichtung zur Bestimmung der Crimphöhe bekannt geworden. Ein Messkopf besteht aus einem Oberteil und einem Unterteil, die mittels Auslegern zusammenfahrbar sind. Das Oberteil ist ausgerüstet mit einer Kraftmesseinrichtung, einer Zentriereinrichtung zur horizontalen Zentrierung eines Leitercrimps und einer ersten Schneide. Das Unterteil besteht aus einer Spitze und einer zweiten Schneide. Beim Schliessen des Messkopfes wird der Leitercrimp mittels der Schneiden und der Zentrierplatten lagekorrigiert. Mittels der Spitze und der ersten Schneide ist die Höhe des Leitercrimps bzw. die Crimphöhe messbar, wobei die Kraftmesseinrichtung den Kraftschluss zwischen Spitze, Leitercrimp und erster Schneide feststellt.

Weiterhin wird die Patentschrift US 5 615 489 zitiert, die ein taktil und optisch messendes Koordinatenmessgerät zeigt.

Es ist deshalb eine Aufgabe der vorliegenden Erfindung, die Nachteile des Bekannten zu vermeiden und insbesondere eine Messanordnung und ein Verfahren zu schaffen, bei der bzw. bei dem mindestens die Crimphöhe eines Leitercrimps zuverlässig bestimmbar ist.

Erfindungsgemäss werden diese Aufgaben mit der Messanordnung und dem Verfahren mit den Merkmalen der unabhängigen Ansprüche gelöst.

Das Visionssystem kann eine Auswert- und Vergleichseinrichtung umfassen, mit der anhand der von der Kamera aufgenommenen Bilder die IST-Lage des Crimpkontakts ermittelt und die IST-Lage mit einer SOLL-Lage des Crimpkontakts verglichen werden kann.

Das Visionssystem kann derart programmiert sein, dass erst wenn alle vorbestimmten Anforderungen an die Lage des Crimpkontakts erfüllt sind, eine Messung der Crimphöhe des Leitercrimps durch die Messvorrichtung vorgenommen wird.

Die Messvorrichtung kann für die taktile Messung einanander gegenüberliegende und mittels eines Aktuators relativ zueinander bewegbare Messtaster aufweisen. Dabei kann ein Messtaster wenigstens für den Messvorgang feststehend und der andere Messtaster beweglich ausgeführt sein. Selbstverständlich könnten auch beide Messtaster beweglich ausgeführt sein

Das mit dem Aktuator verbundene Visionssystem kann derart programmiert sein, dass bei Nichtvorliegen der vorbestimmten Anforderungen an die Lage des Crimpkontakts bzw. falls die vorbestimmten Anforderungen an die Lage des Crimpkontakts nicht erfüllt sind, während der sich im Messbereich befindliche Leitercrimp durch die Messtaster kontaktiert wird, die Messtaster sich automatisch in eine Ruhestellung zurück bewegen.

Wenn die Messanordnung eine Spiegelanordnung aufweist, mit deren Hilfe unterschiedliche Ansichten des Crimpkontakts mit der Kamera abbildbar sind, kann es vorteilhaft sein, wenn die Messvorrichtung eine Schneide als ersten Messtaster umfasst, die rechtwinklig an den ersten und zweiten Spiegel anschliesst und zwischen erstem und zweitem Spiegel angeordnet ist.

Weiter vorteilhafte Weiterbildungen der Erfindung sind in den abhängigen Patentansprüchen angegeben.

Zur Verbesserung des Messprozesses wird die Messanordnung von einem Kamerasystem unterstützt, das den Messprozess vorzugsweise teilweise oder ganz automatisiert, überwacht, visualisiert und protokolliert.

Mindestens ein Bildsensor einer Kamera nimmt Bilder des im Messbereich angeordneten Leitercrimp als auszumessendes Messobjekt auf. Ein Visionssystem wertet nach einem bestimmten Verfahren die Bilder des Bildsensors aus und entscheidet, wann sich ein Messobjekt in einer gültigen Messposition befindet und löst dann eine von den Bildern unabhängige Messung mindestens der Crimphöhe des Leitercrimps aus.

Bei der Messung der Crimphöhe als erstem Parameter können dazu die einander gegenüberliegenden Messtaster (z.B. Messspitze, Messschneide) aufeinander zubewegt werden. Die Messvorrichtung könnte auch andere Mittel zum taktilen Messen der Crimphöhe aufweisen. Der Messwert wird beispielsweise bei einer vordefinierten Klemmkraft aus einer Messuhr oder aus einem Höhenmessgerät gelesen. Der Hub der Messspitze kann verstellbar sein, um die Verzögerung beim Zusammenfahren der Messtaster klein zu halten.

Aus den Bildern können zudem weitere Kriterien analysiert werden, mit denen die Gültigkeit der Messung feststellbar ist und mit denen die Messung gegebenenfalls im Nachhinein verworfen wird, beispielsweise wenn der Leitercrimp oder ein anderes Messobjekt nicht genau senkrecht zur Messachse liegt.

Wenn die Messanordnung wie bereits heute üblicherweise mit der Kabelbearbeitungsmaschine verbunden ist, kann zuverlässig verhindert werden, dass Leitercrimps oder andere Messobjekte mit als fehlerhaft erkannten Messdaten produziert werden.

Mit dem Kamerasystem können weitere Parameter des Messobjektes gemessen werden, beispielsweise die Crimpbreite, der Überstand der Brauen, die Position der Messspitze, die Position der Kabelisolation, die Farbe der Kabelisolation und/oder der Kabeldurchmesser.

Die Messgenauigkeit der optisch ermittelten Parameter kann erhöht werden, indem die Messanordnung mittels anderer Parameter bzw. Messgrössen schätzt, in welchem Abstand sich die Messpunkte befinden und die resultierende perspektivische Verzerrung rechnerisch kompensiert.

Mit Hilfe von Spiegeln kann eine einzige Kamera den Leitercrimp oder ein anderes Messobjekt aus verschiedenen Richtungen abbilden, was gegenüber Lösungen mit mehreren Kameras Kosten reduziert. Die Spiegel können so angeordnet werden, dass das Messobjekt aus verschiedenen Richtungen gleichzeitig scharf abgebildet wird.

Das Visionssystem kann unterschiedliche Beleuchtungen am Messobjekt steuern, so dass die Bildanalyse vereinfacht wird (Licht in horizontaler Richtung auch Durchlicht genannt) oder die Bildqualität verbessert wird (Licht in vertikaler Richtung auch Auflicht genannt). Die Beleuchtung kann über vorhandene Spiegel in die gewünschte Richtung umgeleitet werden, beispielsweise für horizontales Durchlicht oder vertikales Auflicht ohne zusätzliche Lichtquellen.

Die Kamera kann zusätzlich als Lupe oder als Mikroskop verwendet werden, ohne dass eine Messung durchgeführt wird, was nützlich ist, wenn der Bediener beispielsweise eine Crimpverbindung prüfen möchte.

Eine weitere Vereinfachung der Handhabung kann erzielt werden, wenn der Crimpkontakt mit dem Leitercrimp in eine Vorrichtung gespannt wird, die in den Messbereich bewegbar ist. Eine solche Vorrichtung kann manuell oder automatisch in den Messbereich geführt werden. Die Vorrichtung kann so ausgebildet sein, dass die Crimpverbindung zusätzlich um die Kabelachse gedreht verschoben werden kann, so dass der Bediener den Leitercrimp an verschiedenen Stellen und unter verschiedenen Winkeln betrachten kann, ohne dass es den Bildbereich verlässt.

Auf dem digitalen Bild kann der Bediener Messpunkte setzen und beliebige Stellen auf dem Bild ausmessen. Auf das digitale Bild können zusätzlich Skalen eingeblendet werden, die den Bediener bei weitergehenden Messungen unterstützen. Auf Grund der gemessenen Parameter, beispielsweise Crimphöhe und/oder Crimpbreite kann das Visionssystem berechnen, wie gross der maximale Messfehler auf Grund der perspektivischen Verzerrungen ist.

Das Abbild des Messobjektes ist eine Projektion in vertikaler Richtung und eine Projektion in horizontaler Richtung. Beide Projektionen werden von einer Kamera gleichzeitig erfasst. Die Projektion in vertikaler Richtung wird im Weiteren auch Schattenbild des Messobjektes von unten und die Projektion in horizontaler Richtung wird im Weiteren auch Schattenbild des Messobjektes von der Seite genannt.

In einer Ausführungsvariante kann das Visionssystem aus allen erhaltenen Bilddaten neben der Crimphöhe als Parameter weitere Parameter bzw. Messwerte bestimmen, beispielsweise die Breite des Leitercrimps oder eines anderen Teils des Crimpkontaktes oder die Position des Kabelleiters oder des Randes der Kabelisolation bezüglich des Crimpkontaktes.

Wie oben erwähnt kann das Visionssystem bei einer Crimpverbindung beispielsweise die Crimphöhe zusätzlich zur Ermittlung der Crimphöhe mittels einer Messuhr oder eines Höhenmessgerätes aus den Bilddaten ermitteln. Weil das optisch ausgewertete Schattenbild immer die maximalen Dimensionen des Messobjektes bestimmt, während die Messuhr punktuell misst, lässt sich die korrekte Crimphöhe mit der maximalen Ausdehnung des Messobjekts vergleichen. Eine grössere Crimphöhe deutet auf eine Crimpverbindung mit unzulässig vorstehenden Brauen hin.

Anstelle einer Kamera mit flächigem Bildsensor können auch Zeilensensoren verwendet werden, die die Linien abtasten. Anstelle von Zeilensensoren können auch PSD (Position sensitive Device) Sensoren verwendet werden, die Analogsignale erzeugen, die den Positionen der Schattens auf den Linien in der vertikalen und in der horizontalen Ansicht entspricht.

Anstelle einer Kamera mit Linse kann auch eine punktförmige Lichtquelle oder Laserstrahlen das Schattenbild ohne Linse auf den oder die Bildsensoren projizieren.

Mit der Messanordnung zusammen mit dem Visionssystem werden folgende Vorteile erreicht:
Fehlmessungen werden erkannt und vermieden. Die Messung am Leitercrimp finden unter reproduzierbaren Bedingungen statt. Neben der Crimphöhe können weitere Parameter bzw. Messgrössen ermittelt werden. Gleichzeitig mit der Messung kann der Bediener die optische Kontrolle der Crimpverbindung vornehmen. Das Messobjekt und die Messsituation werden zum Zeitpunkt der Messung als digitales Bild gespeichert. Die Messung kann zu Qualitätszwecken dokumentiert, nachträglich überprüft und rückverfolgt werden. Das Messobjekt wird zum Aufnahmezeitpunkt an einem bestimmten Ort festgehalten, fokussieren wird dadurch überflüssig, auch tritt keine Bewegungsunschärfe auf. Das manuelle Auslösen der Messung entfällt, der Bediener hat beide Hände frei, beispielsweise kann er den Leitercrimp rascher und präziser in die Messposition bringen. Dank der optischen Vergrösserung kann das Messobjekt und die Messposition besser beurteilt werden. Die Messanordnung kann auch als optische Vergrösserungseinrichtung mit Aufnahmefunktion und Messunterstützung verwendet werden. Die optische Vergrösserung liefert Bilder aus verschiedenen Blickwinkeln, ohne dass der betrachtete Leitercrimp bewegt werden muss.

Anhand der beiliegenden Figuren wird die Messanordnung näher erläutert.

Es zeigen:
Fig. 1 und Fig. 2
   eine schematische Darstellung einer maschinellen 3-Punkt Crimphöhenmessung,
Fig. 3
   einen Leitercrimp im Querschnitt,
Fig. 4
   eine Messanordnung zur Messung eines Crimpkontaktes,
Fig. 5
   Einzelheiten eines Messbereichs,
Fig. 6 und Fig. 7
   die Messanordnung mit Lichtquellen,
Fig. 8
   einen Strahlengang der Messanordnung,

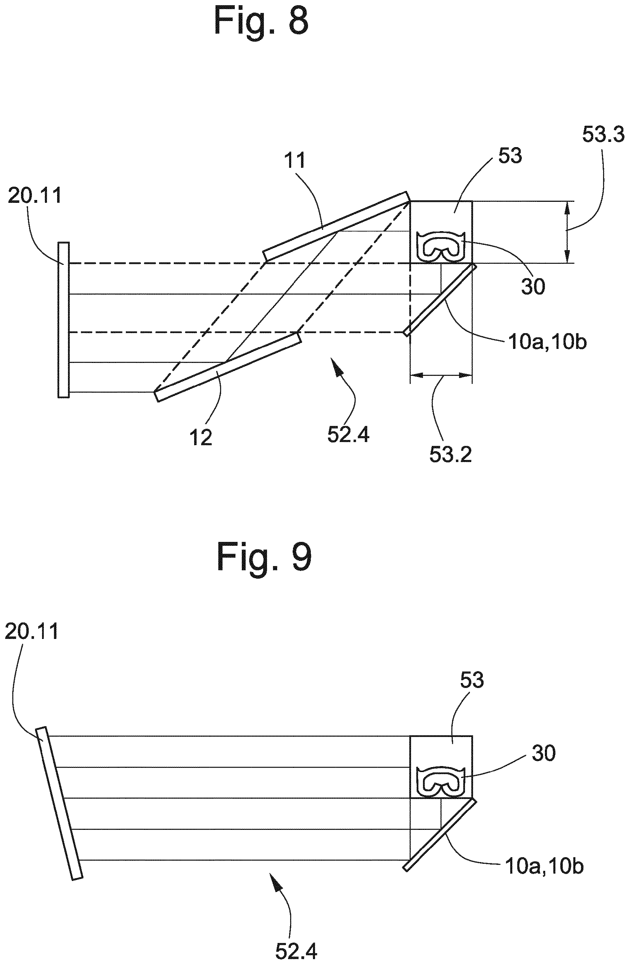

Fig. 9 eine Variante des Strahlenganges,
Fig. 10
   ein Bild des Crimpkontaktes und
Fig. 11
   ein Blockschaltbild eines Visionssystems zur Steuerung der Messanordnung.

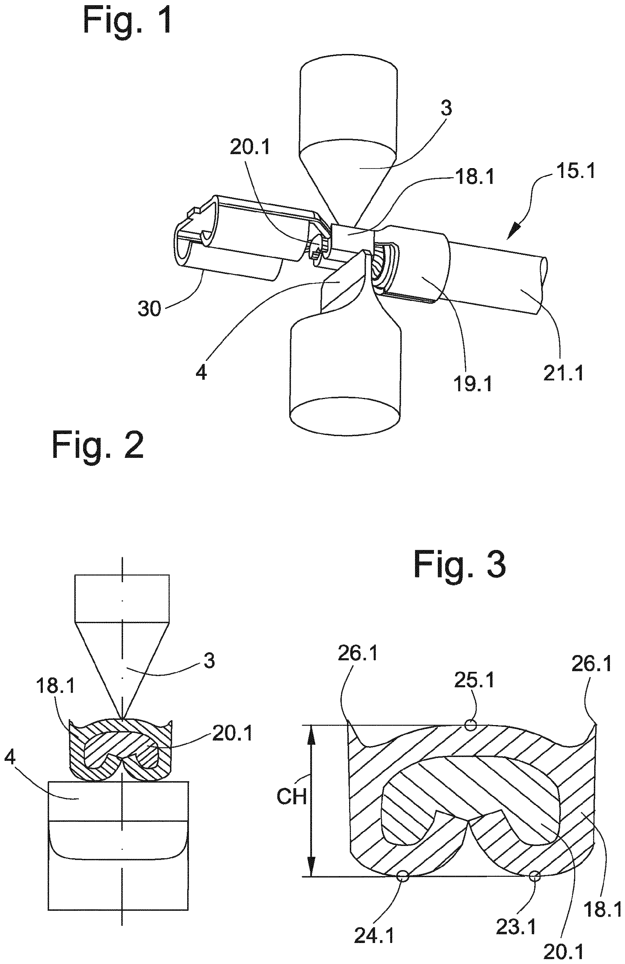

Fig. 1 und Fig. 2 zeigen eine schematische Darstellung einer 3-Punkt Crimphöhenmessung mittels Messtastern. Der an einem Kabel 15.1 angeschlagene Crimpkontakt 30 weist einen Leitercrimp 18.1 und einen Isolationscrimp 19.1 auf, wobei der Leitercrimp 18.1 einen Kabelleiter 20.1 umfasst und der Isolationscrimp 19.1 eine Kabelisolation 21.1 umfasst. Leitercrimp 18.1 und Isolationscrimp 19.1 werden beim Crimpvorgang plastisch deformiert und mittels Crimpstempel und Crimpamboss in die gezeigte Form gepresst. Als erster Messtaster ist eine erste Schneide 4 in Kontakt mit der einen Seite des Leitercrimps 18.1. Als zweiter Messtaster ist eine Spitze 3 in Kontakt mit der anderen Seite des Leitercrimps 18.1. Die Position der Schneide 4 ist messbar mittels einer Messeinrichtung. Die Position der Spitze 3 ist messbar mittels der Messeinrichtung. Die Differenz der beiden Positionen entspricht der in Fig. 3 gezeigten Crimphöhe CH.

Fig. 3 zeigt einen Querschnitt des Leitercrimps 18.1 mit den für die 3-Punkt Crimphöhenmessung relevanten Kontaktpunkten der Messtaster. An der einen Seite des Leitercrimps 18.1 steht die Schneide 4 an einem ersten Punkt 23.1 und an einem zweiten Punkt 24.1 in Verbindung mit dem Leitercrimp 18.1. An der anderen Seite des Leitercrimps 18.1 steht die Spitze 3 an einem dritten Punkt 25.1 in Verbindung mit dem Leitercrimp 18.1. Mit 26.1 sind Gräte bezeichnet, die beim Crimpvorgang vorwiegend durch den zunehmenden Verschleiss des Crimpstempels und des Crimpamboss an der anderen Seite des Leitercrimps 18.1 entstehen. Die Bestimmung der Crimphöhe mittels der Schneide 4 an der einen Seite und der Spitze 3 an der anderen Seite des Leitercrimps 18.1 wird durch die Gräte 26.1 nicht verfälscht. Die Crimphöhe CH ergibt sich aus dem Abstand der durch den ersten Punkt 23.1 und zweiten Punkt 24.1 definierten einen Seite und von der durch den dritten Punkt 25.1 definierten anderen Seite des Leitercrimps 18.1.

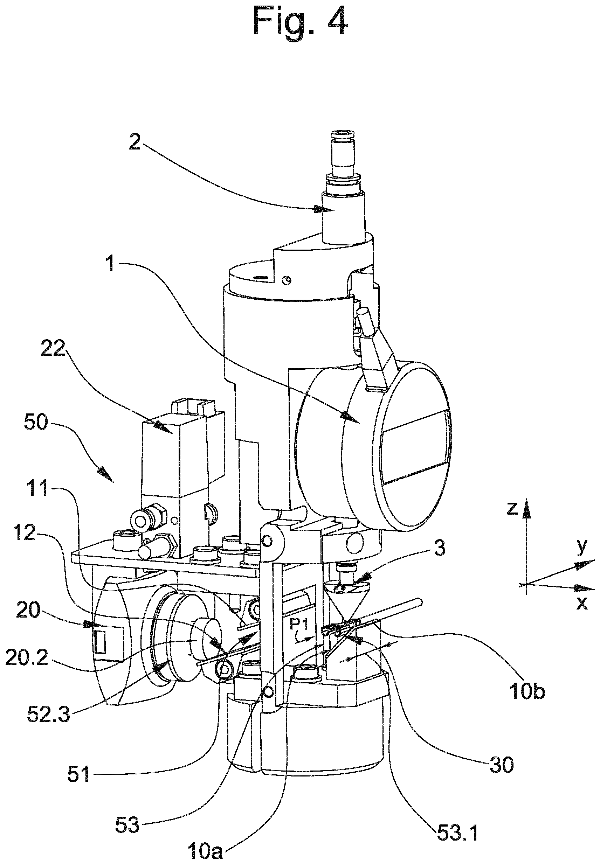

Fig. 4 zeigt eine Messanordnung 50 zur Aufnahme und Auswertung eines Crimpkontaktes 30 in einem Messbereich 53. Eine Kamera 20 nimmt die Bilder auf vom Messobjekt im Messbereich 53 und ein Visionssystem wertet diese Bilder aus. Die Kamera 20 ist beispielsweise eine handelsübliche, digitale CCD Kamera. Ausserdem ist ein Höhenmessgerät 1 vorgesehen, mittels dem mindestens ein Parameter des Messobjektes, beispielsweise die Crimphöhe CH des Leitercrimps des Crimpkontaktes 30 messbar ist. Die Crimphöhe CH wird wie in Fig. 1 dargestellt taktil gemessen. Der Leitercrimp 18.1 liegt auf der Schneide 4 und die Spitze 3 wird von oben auf den Leitercrimp 18.1 abgesenkt.

Die Kamera 20 ist rückwärtig von einem Messbereich 53 angeordnet und kann den Messbereich 53 mit dem Crimpkontakt 30 erfassen. Eine Spiegelanordnung 51 besteht aus mehreren Spiegeln, auf der einen Seite der Schneide 4 ist ein erster Spiegel 10a und auf der anderen Seite der Schneide 4 ist ein zweiter Spiegel 10b angeordnet. Mit dem ersten Spiegel 10a und dem zweiten Spiegel 10b kann die Kamera 20 den Messbereich 53 bzw. den Crimpkontakt 30 beidseits der Schneide 4 von unten sehen. Mit einem dritten Spiegel 11 und einem vierten Spiegel 12 kann die Kamera 20 den Messbereich 53 bzw. den Crimpkontakt 30 von der Seite sehen.

Der dritte Spiegel 11 und der vierte Spiegel 12 lenken den Strahlengang der seitlichen Ansicht so um, dass die Abstände zwischen Kamera 20 und Messbereich 53 für die Ansicht von der Seite und für die Ansicht von unten gleich gross sind, die Kamera 20 kann so beide Ansichten gleichzeitig scharf abbilden. Die Kamera 20 ist so ausgerichtet, dass beide Ansichten gleichzeitig auf einen Bildsensor 20.11 der Kamera 20 sichtbar sind.

Die Ansicht von unten ist eine vertikale Projektion des Messobjektes, die Ansicht von der Seite ist eine horizontale Projektion des Messobjektes.

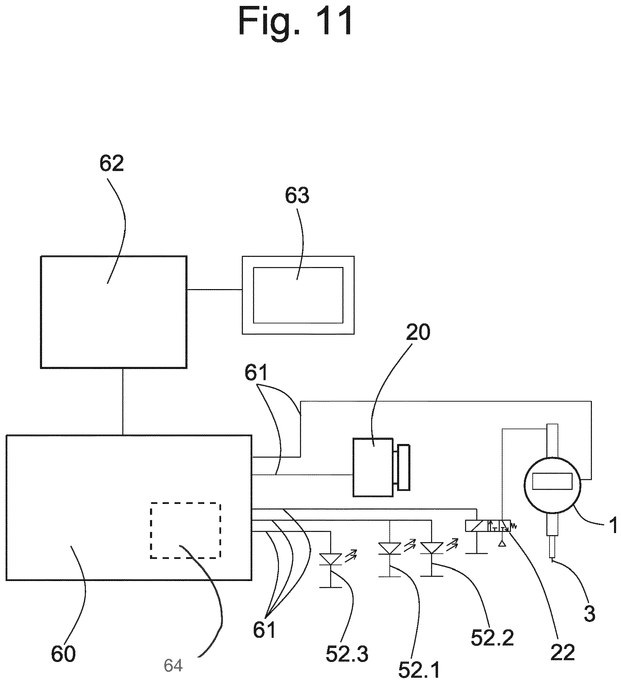

Die Kamera 20 überträgt laufend, beispielsweise mit einer Rate von 25 Bildern pro Sekunde, die Bilddaten an das (hier nicht dargestellte) bildverarbeitende Visionssystem, das die Bilddaten, wie weiter unten erläutert, auswertet und entsprechende Steuerungssignale generiert (vgl. nachfolgende Fig. 11).

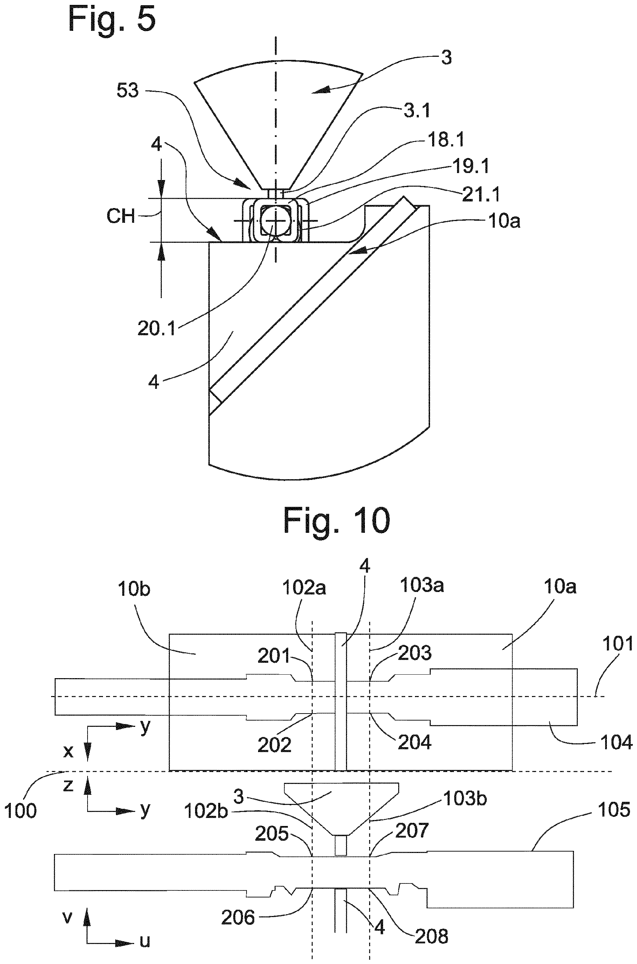

Fig. 5 zeigt einen Schnitt durch den im Messbereich 53 angeordneten Leitercrimp 18.1 vor der Schneide 4, gesehen aus der mit einem in Fig. 1 gezeigten Pfeil P1 symbolisierten Richtung. Der Leitercrimp 18.1 liegt auf der Schneide 4 und die Spitze 3 drückt mit einem Dorn 3.1 auf den Leitercrimp 18.1. Vor der Schneide 4 ist der erste Spiegel 10a zu sehen, der zweite Spiegel 10b liegt hinter der Schneide 4 und ist nicht sichtbar.

Das Visionssystem kann unterschiedliche Beleuchtungen am Messobjekt steuern, so dass die Bildanalyse vereinfacht wird (Licht in horizontaler Richtung, auch Durchlicht genannt) oder die Bildqualität verbessert wird (Licht in vertikaler Richtung, auch Auflicht genannt).

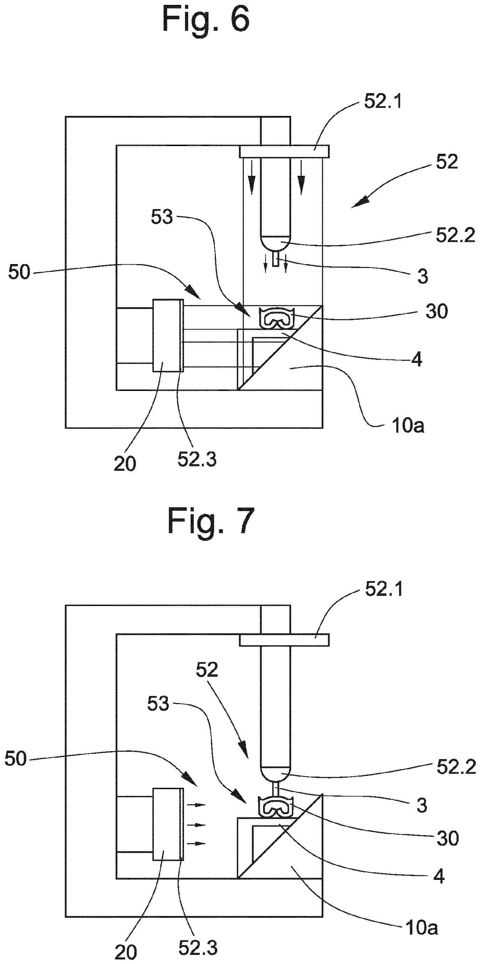

Wie in Fig. 6 und in Fig. 7 gezeigt besteht eine Beleuchtung 52 aus einer ersten Lichtquelle 52.1, aus einer zweiten Lichtquelle 52.2 und aus einer dritten Lichtquelle 52.3. Die erste Lichtquelle 52.1 und die zweite Lichtquelle 52.2 leuchten den Messbereich 53 von oben aus, wobei die erste Lichtquelle 52.1 konzentrisch zur Spitze 3 den Messbereich 53 ausleuchtet und die zweite Lichtquelle 52.2 die Fläche unter der Spitze 3 ausleuchtet. Die erste Lichtquelle 52.1 und die zweite Lichtquelle 52.2 können auch (bei entsprechender Formgebung der Spitze 3 wie in Fig. 4 gezeigt) als eine Lichtquelle ausgebildet sein. Die dritte Lichtquelle 52.3 ist konzentrisch zum Objektiv 20.2 der Kamera 20 angeordnet und beleuchtet den Messbereich 53 von der Seite.

Das Abbild des Messobjektes bzw. des Crimpkontaktes 30 ist eine Projektion in vertikaler Richtung und eine Projektion in horizontaler Richtung. Beide Projektionen werden von der Kamera 20 gleichzeitig erfasst. Die Projektion in vertikaler Richtung wird im Weiteren auch Schattenbild des Messobjektes von unten und die Projektion in horizontaler Richtung wird im Weiteren auch Schattenbild des Messobjektes von der Seite genannt.

Die Lichtquelle 52.1, 52.2 der Spitze 3 ist ein leuchtender Kegel und mit dem Strahlengang über den dritten Spiegel 10a und über den vierten Spiegel 10b kann die Kamera 20 den Messbereich 53 bzw. den Crimpkontakt 30 seitlich und von unten als Schattenbild mit hellem Hintergrund sehen. (siehe auch Fig. 10). Der leuchtende Kegel besteht aus einem lichtdurchlässigen, diffusen Material, in welchem LEDs so eingebaut sind, dass das Licht gleichmässig abgestrahlt wird. Um Störungen durch Umgebungslicht zu reduzieren, ist bei der Kamera 20 eine sehr kurze Belichtungszeit eingestellt (beispielsweise 100 Mikrosekunden) und die LEDs werden nur während der kurzen Belichtungszeit mit einem hohen Strom angesteuert und damit der Messbereich 53 bzw. der Crimpkontakt 30 mit einer höheren Lichtintensität als das Umgebungslicht belichtet. Trotzdem bleibt die mittlere Lichtintensität und der mittlere Strom durch die LEDs klein, sodass der Bediener nicht geblendet wird und die LEDs nicht überlastet werden.

Wenn der Bediener einen Leitercrimp 18.1 oder einen an einem Kabel 15.1 angeschlagenen Crimpkontakt 30 mit dem Leitercrimp manuell in den Messbereich 53 führt, prüft das Visionssystem mit dem nachfolgend beschriebenen Verfahren permanent, ob sich das Messobjekt in der Ansicht von unten in der vorgeschriebenen Messposition befindet. Sobald dies der Fall ist, aktiviert das Visionssystem einen Aktuator 2, beispielsweise einen mittels Ventil 22 geschalteter Pneumatikzylinder 2, der die Spitze 3 auf das Messobjekt 30 absenkt. Auf dem nun in Messposition festgehaltenen Messobjekt prüft das Visionssystem, ob das Messobjekt auch in der seitlichen Ansicht in einer korrekten Messposition ist. Ist das Messobjekt ausserhalb der korrekten Messposition, aktiviert das Visionssystem den Aktuator 2 in entgegengesetzter Richtung und die Spitze 3 wird wieder nach oben bewegt. Das Visionssystem erzeugt für den Bediener mittels Signallampen eine entsprechende Rückmeldung. Das Visionssystem kann dem Bediener als Rückmeldung auch ein Kamerabild mit Fehlermeldungen auf einem Bildschirm darstellen.

Das oben genannte, mehrstufige Messverfahren (zuerst Sicht von unten kontrollieren, dann Messspitze bewegen, dann Sicht von der Seite beurteilen) hat den Vorteil, dass der Bediener das Messobjekt nicht in allen Freiheitsgraden gleichzeitig richtig halten muss. Die Reihenfolge kann aber auch vertauscht werden oder alle Parameter können gleichzeitig geprüft und erst dann die Spitze 3 bewegt werden.

Stellt das Visionssystem, wie weiter unten erläutert, fest, dass die Messposition in beiden Ansichten korrekt ist, wird die Messung am Messobjekt bzw. die Messung des mindestens der Crimphöhe ausgelöst und der Messwert über eine digitale Schnittstelle aus dem Höhenmessgerät 1 ausgelesen. Gleichzeitig kann das Kamerabild zum Messzeitpunkt abgespeichert und mit den Messdaten verknüpft werden.

Das Visionssystem kann die dritte Lichtquelle 52.3 einschalten, welche das Messobjekt aus Richtung der Kamera 20 beleuchtet damit das Messobjekt besser erkennbar wird. Dieses Bild kann ebenfalls abgespeichert und mit den Messdaten verknüpft werden. Mit den gespeicherten Messdaten und den zugehörigen Bildern kann zu Zwecken der Qualitätssicherung auch im Nachhinein festgestellt werden, unter welchen Umständen die Messung am Messobjekt durchgeführt wurde.

Das Visionssystem kann unterschiedliche Beleuchtungen am Messobjekt steuern, so dass die Bildanalyse vereinfacht wird (Licht in horizontaler Richtung, auch Durchlicht genannt) oder die Bildqualität verbessert wird (Licht in vertikaler Richtung, auch Auflicht genannt).

Fig. 8 zeigt einen Strahlengang 52.4 zur Abbildung des Messobjektes (Crimpkontakt) 30 auf dem Bildsensor 20.11 der Kamera 20. Mit Hilfe der Spiegelanordnung 51, bestehend aus dem ersten Spiegel 10a, dem zweiten Spiegel 10b, dem dritten Spiegel 11 und dem vierten Spiegel 12 kann eine einzige Kamera 20 das Messobjekt aus verschiedenen Richtungen abbilden. Die Spiegel 10a, 10b, 11, 12 sind so angeordnet, dass das Messobjekt aus verschiedenen Richtungen (von unten und von der Seite) am Bildsensor 20.11 gleichzeitig scharf abgebildet wird. Die Grösse des Messbereichs 53 ist bestimmt durch die erste Projektion 53.2 des ersten Spiegels 10a und des zweiten Spiegels 10b und durch die zweite Projektion 53.3 des dritten Spiegels 11 und durch die Spiegelbreite 53.1.

Fig. 9 zeigt eine Ausführungsvariante des Strahlenganges 52.4, bei dem das Messobjekt auch aus verschiedenen Richtungen (von unten und von der Seite) am Bildsensor 20.11 gleichzeitig scharf abgebildet wird. Die unterschiedliche Strahlenlänge zwischen der Sicht von der Seite und der Sicht von unten wird mit dem schräggestellten Bildsensor 20.11 ausgeglichen. Möglich ist auch ein zweiteiliger, parallel zum Messobjekt verlaufender Bildsensor, bei dem der Teil für die Sicht von unten näher am Messobjekt ist.

Das Abbild des Messobjektes ist eine Projektion in vertikaler Richtung und eine Projektion in horizontaler Richtung. Beide Projektionen werden von der Kamera 20 gleichzeitig erfasst. Die Projektion in vertikaler Richtung wird im Weiteren auch Schattenbild des Messobjektes von unten und die Projektion in horizontaler Richtung wird im Weiteren auch Schattenbild des Messobjektes von der Seite genannt.

Fig. 10 zeigt ein Bild eines Messobjektes, beispielsweise eines Crimpkontaktes 30. Der Crimpkontakt 30 ist als Schattenbild, wie ihn die Kamera 20 sieht, gezeigt. Mit Hilfe der Spiegelanordnung 51 wird das Messobjekt gleichzeitig aus verschiedenen Richtungen abgebildet, nämlich als Schattenbild 104 von unten und als Schattenbild 105 von der Seite. Linien 100, 101, 102a, 102b und 103a, 103b sowie Koordinatensysteme sind vom Visionssystem eingeblendet und dienen der Auswertung der Lage des Messobjektes im Messbereich 53.

Oberhalb der Linie 100 ist das Schattenbild 104 des Crimpkontaktes 30 von unten und unterhalb der Linie 100 ist das Schattenbild 105 von der Seite gezeigt. Die Linie 101 beschreibt die ideale Achse des Messobjekts bzw. des Crimpkontaktes 30 im Schattenbild 104 von unten, in welcher Linie 101 der Crimpkontakt 30 senkrecht zur Schneide 4 und mittig zur Spitze 3 im Idealfall liegt.

Für den Messvorgang gelten folgende Voraussetzungen:
Der Crimpkontakt ist in x-Richtung so zu positionieren, dass die Spitze 3 in x-Richtung mittig zum Leitercrimp 18.1 ist, damit die Spitze 3 am Punkt 25.1 misst. Zudem ist der Crimpkontakt 30 so um die z-Achse zu drehen, dass die Kabellängsachse senkrecht zur Ebene der Schneide 4 liegt. Der Crimpkontakt 30 ist in y-Richtung so zu positionieren, dass die Spitze 3 und die Schneide 4 auf dem ebenen Teil des Leitercrimps 18.1 misst. Der Leitercrimp 18.1 soll die Schneide an den Punkten 24.1 und 23.1 der Fig. 3 berühren.

Der Bediener bereitet das Messobjekt bzw. den Crimpkontakt 30 vor, indem er das Kabelende 15.1 möglichst kurz abschneidet, aber so, dass er es mit den Fingern festhalten kann. Dann legt er den Crimpkontakt 30 mit den Punkten 24.1 und 23.1. (siehe Fig. 3) nach unten auf die Schneide 4 und positioniert es von Auge so, dass die Kabellängsachse ungefähr horizontal und senkrecht zur Schneide 4 verläuft und die Schneide 4 den Leitercrimp 18.1 in dessen ebenem Teil berührt. Nun verschiebt der Bediener den Crimpkontakt 30 in x-Richtung zur Spitze 3, bis der Messvorgang ausgelöst wird und die Spitze 3 nach unten bewegt wird und der Crimpkontakt 30 mit einer mittels des Aktuators 2 erzeugten, definierten Kraft zwischen Spitze und Schneide klemmt. Die Schneide 4 weist horizontale Messflächen auf, wodurch beim Klemmen des Crimpkontaktes 30 ein Drehmoment in der x-Achse erzeugt und der Crimpkontakt 30 in die horizontale Lage gedrückt wird.

Nun überprüft das Visionssystem, wie weiter unten erläutert, die oben genannten Bedingungen. Sind alle Bedingungen erfüllt, liest das Visionssystem das Höhenmessgerät 1 aus und übermittelt die Daten an eine Maschinensteuerung, zusammen mit dem aktuellen Bild der Kamera 20. Die Maschinensteuerung speichert die Messdaten und das zugehörige Bild auf einem Massenspeicher ab.

Anderenfalls übermittelt das Visionssystem der Maschinensteuerung die Fehlersituation und diese stellt den Fehler via Bildschirm dem Bediener zur Verfügung. Zusätzlich wird das Visionssystem die Spitze 3 wieder anheben. Die Positionierung des Crimpkontaktes 30 kann dann wiederholt werden.

Auf dem Sensor 20.11 der Kamera 20 wird ein Bild projiziert wie in Fig. 10 dargestellt. Auf dem Bild wird auch ein Koordinatensystem (u,v) definiert.

Die projizierten Helligkeitswerte werden laufend, beispielsweise mit 20 Bildern pro Sekunde, über eine serielle Datenverbindung an das Visionssystem übertragen. Jedes eintreffende Bild wird mittels Visionssystem folgenden Verarbeitungsschritten unterzogen:
Jeder Bildpunkt weist einen Helligkeitswert h auf. Mit einem geeigneten Schwellenwert hs werden die Bildpunkte in die Kategorien Hintergrund und Schatten eingeteilt. Die Bildpunkte, deren Helligkeitswert h < hs gehören zur Kategorie Schatten, diejenigen mit h >= hs zur Kategorie Hintergrund.

Um die Lage des Messobjektes von unten zu bestimmen, werden mittels Visionssystem folgende Verfahrensschritte durchgeführt:
Das Visionssystem sucht vom oberen Bildrand her mit absteigender Koordinate v auf der Linie 102a den ersten Bildpunkt, der zur Kategorie Schatten gehört. Dieser Punkt wird als Punkt 201 mit den Koordinaten (u201,v201) zwischengespeichert.

Das Visionssystem sucht von der Linie 100 her mit aufsteigender Koordinate v auf der Linie 102a den ersten Bildpunkt, der zur Kategorie Schatten gehört. Dieser Punkt wird als Punkt 202 mit den Koordinaten (u202,v202) zwischengespeichert.

Analog werden auf der Linie 103a die Punkte 203 mit (u203,v203) sowie 204 mit (u204,v204) bestimmt und zwischengespeichert.

Damit oben genannten Bedingung erfüllt sind, muss bei einem bezüglich der Linie 101 spiegelsymmetrischen Messobjekt bestimmte, rechnerisch aus den oben genannten Koordinaten ermittelte Werte erfüllt sein. Kleine Abweichung werden toleriert. Erst wenn die oben genannten Bedingungen erfüllt sind, löst das Visionssystem mittels des Ventils 22 die Spitze 3 aus. Nun ist der Crimpkontakt 30 in der Messanordnung 50 festgeklemmt.

Das Visionssystem überprüft auf den weiterhin von der Kamera 20 eintreffenden Bildern weitere Bedingungen:
Dazu werden erneut die Punkte 201, 202, 203 und 204 wie oben dargelegt bestimmt und die oben genannten Bedingungen geprüft, weil sich beim Schliessen der Spitze 3 das Messobjekt eventuell verschoben hat. Zusätzlich werden analog zu den Punkten 201, 202, 203 und 204 die Punkte 205 mit (u205,v205), 206 mit (u206,v206), 207 mit (u207,v207) und 208 mit (u208,v208) bestimmt und aus den Koordinaten bestimmte Werte berechnet. Kleine Abweichung werden toleriert. Die Prüfung der oben genannten Bedingungen wird noch verfeinert, indem die Linien 102b und 103b mehrmals in u-Richtung leicht versetzt werden und die Auswertung jedes Mal wiederholt wird. Wenn alle oben genannten Bedingungen über mehrere aufeinanderfolgende, beispielsweise über fünf eintreffende Bilder konstant erfüllt sind, erkennt das Visionssystem die Messung als gültig.

Die Crimphöhe CH kann nicht nur mit dem Höhenmessgerät 1, sondern - wenn auch mit verminderter Genauigkeit - auch aus den Schattenbildern gemessen werden.

Die optisch gemessene Höhe hopt wird rechnerisch bestimmt aus den Koordinaten der Punkte 205, 206, 207, 208 an der Position der Spitze 3 auf den Linien 102b und 103b. Die Höhe hopt entspricht dem maximalen Abstand zwischen der Linie durch 24.1 und 23.1 und einem der drei Punkte 26.1, 26.1 und 25.1 der Fig. 3.

Die Messuhr mit der Spitze 3 hingegen misst nur den Abstand CH zwischen der Linie durch 24.1 und 23.1 und Punkt 25.1 der Fig. 3.

Bei einem korrekt verarbeiteten Crimpkontakt 30 sollten die Gräte 26.1 nicht über den Punkt 25.1 der Fig. 3 herausragen. Dies kann das Visionssystem durch Vergleich der Messwerte hopt und CH überprüfen: wenn hopt > CH, so kann gefolgert werden, dass mindestens einer der beiden Gräte 26.1 über den Punkt 25.1 der Fig. 3 hinausragt. Eine korrekte Crimphöhenmessung ist trotzdem möglich, das Visionssystem kann aber beispielsweise eine entsprechende Warnung erzeugen und die Information mit den Messdaten an die Maschinensteuerung übermitteln.

Der Messwert bzw. die gemessene Crimphöhe CH als Parameter kann an die Kabelbearbeitungseinheit übermittelt werden, die anhand des Messwertes beispielsweise die Crimpposition einer Crimppresse automatisch anpasst.

Das Messobjekt, beispielsweise der Crimpkontakt 30 kann auch anstatt manuell maschinell, beispielsweise mittels einer greiferartigen Vorrichtung in den Messbereich 53 gebracht werden. Der Messvorgang kann so vollständig automatisiert werden. Die Vorrichtung kann so ausgebildet sein, dass das Messobjekt zusätzlich um die Kabelachse drehbar oder entlang der Kabelachse verschiebbar ist.

Als Messobjekt kann an Stelle des Crimpkontaktes 30 beispielsweise auch eine Crimphülse oder ein Messerkontakt oder eine Tülle oder eine auf das Ende der Kabelisolation 21.1 aufschiebbare Kappe mit Farbcode positioniert und gemessen werden. Anstelle der Crimphöhe CH als Messparameter kann beispielsweise die Lage des Messobjektes auf dem Kabelleiter 20.11 oder der Durchmesser des Messobjektes gemessen werden. Anstelle des Höhenmessgerätes 1 kann eine andere Messvorrichtung, beispielsweise ein Mikrometer oder eine digitale Messuhr verwendet werden, die Art der Messtaster wird je nach Messobjekt und je nach Art der Messung gewählt.

Die Messvorrichtung kann prinzipiell auch für kleine Messobjekte der Uhrenindustrie verwendet werden.

Fig. 11 zeigt ein Blockschaltbild des Visionssystems 60 zur Steuerung der Messanordnung 50. Das Visionssystem 60 besteht im Wesentlichen aus einem Rechner, einem Arbeitsspeicher, einem Programmspeicher, einem Datenspeicher, einer Stromversorgung, Ein-/Ausgängen zur Verbindung mit der Messanordnung 50, beispielsweise serielle Verbindungen 61 zum Ventil 22, zur Kamera 20, zum Höhenmessgerät 1 und zur Beleuchtung 52 mit den Lichtquellen 52.1, 52.1 und 52.3. Das oben genannte Verfahren zur Bildauswertung ist als Software im Programmspeicher abgelegt und wird vom Rechner abgearbeitet. Das Visionssystem 60 umfasst eine Auswert- und Vergleichseinrichtung 64, mit der anhand der von der Kamera aufgenommenen Bilder die IST-Lage des Crimpkontakts ermittelt und die IST-Lage mit einer SOLL-Lage des Crimpkontakts verglichen werden kann. Im Weiteren steht das Visionssystem 60 in elektronischer Verbindung mit einer Maschinensteuerung 62 mit einem Bildschirm 62, der als visuelle Schnittstelle dem Bediener dient. Die Maschinensteuerung 62 steuert beispielsweise eine Kabelbearbeitungsmaschine zur Herstellung der in Fig. 1 gezeigten Crimpkontakts.

## Patentansprüche

1. Messanordnung (50) zur Bestimmung mindestens der Crimphöhe (CH) eines Leitercrimps (18.1) eines Crimpkontakts (30), bestehend aus einer Kamera (20) zur Aufnahme von Bildern (104,105) des Crimpkontakts (30) in einem Messbereich (53) und bestehend aus einem Visionssystem (60) eingerichtet zur Auswertung der Bilder (104,105) und zum Bestimmen und Beurteilen der Lage des Crimpkontakts (30) und bestehend aus einer mit dem Visionssystem (60) verbundenen Messvorrichtung (1) zur taktilen Messung der Crimphöhe (CH) des Leitercrimps (18.1), wobei die Messvorrichtung (1) einanander gegenüberliegende und mittels eines Aktuators (2) relativ zueinander bewegbare Messtaster (3, 4) aufweist, wobei die Messtaster (3, 4) dazu ausgestaltet sind, den Leitercrimp (18.1) zur Messung der Crimphöhe (CH) von zwei Seiten zu kontaktieren.

2. Messanordnung (50) nach Anspruch 1, wobei das Visionssystem (60) eine Auswert-und Vergleichseinrichtung (64) umfasst, die dazu eingerichtet ist, mit der anhand der von der Kamera aufgenommenen Bilder (104,105) die IST-Lage des Crimpkontakts (30) zu ermitteln und die IST-Lage mit einer SOLL-Lage des Crimpkontakts (30) zu vergleichen.

3. Messanordnung (50) nach Anspruch 1 oder 2, wobei das Visionssystem (60) derart programmiert ist, dass erst wenn alle vorbestimmten Anforderungen an die Lage des Crimpkontakts (30) erfüllt sind, eine Messung der Crimphöhe (CH) des Leitercrimps (18.1) durch die Messvorrichtung (1) vorgenommen wird.

4. Messanordnung (50) nach einem der Ansprüche 2 bis 3, wobei das mit dem Aktuator (2) verbundene Visionssystem (60) derart programmiert ist, dass bei Nichtvorliegen der vorbestimmten Anforderungen an die Lage des Crimpkontakts (30) bzw. falls die vorbestimmten Anforderungen an die Lage des Crimpkontakts (30) nicht erfüllt sind, während der sich im Messbereich (53) befindliche Leitercrimp (18.1) durch die Messtaster (3, 4) kontaktiert wird, die Messtaster (3, 4) sich automatisch in eine Ruhestellung zurück bewegen.

5. Messanordnung (50) nach einem der Ansprüche 1 bis 4, wobei eine Spiegelanordnung (51) vorgesehen ist, mit deren Hilfe unterschiedliche Ansichten des Crimpkontakts (30) auf einem Bildsensor (20.11) der Kamera (20) abbildbar sind.

6. Messanordnung (50) nach Anspruch 5, wobei die Spiegelanordnung (51) einen ersten und zweiten Spiegel (10a, 10b) für die Abbildung des Crimpkontakts (30) von unten aufweist.

7. Messanordnung (50) nach Anspruch 6, wobei die Messvorrichtung (1) eine Schneide (4) als ersten Messtaster umfasst, die rechtwinklig an den ersten und zweiten Spiegel (10a, 10b) anschliesst und zwischen erstem und zweitem Spiegel (10a, 10b) angeordnet ist.

8. Messanordnung (50) nach Anspruch 6 oder 7, wobei die Spiegelanordnung (51) weiter einen dritten und vierten Spiegel (11, 12) für die Abbildung des Crimpkontakts (30) von der Seite aufweist.

9. Messanordnung (50) nach einem der Ansprüche 1 bis 8, wobei eine mittels des Visionssystem (60) steuerbare Beleuchtung (52) vorgesehen ist zur Beleuchtung der unterschiedlichen Ansichten.

10. Kabelbearbeitungsmaschine mit einer Messanordnung (50) nach den Ansprüchen 1 bis 9.

11. Verfahren zur Bestimmung mindestens der Crimphöhe (CH) eines Leitercrimps (18.1) einer Crimpkontakts (30) nach folgenden Schritten:
a) Crimpkontakt (30) in einen Messbereich (53) bringen,
b) Bilder (104,105) des Crimpkontakts (30) aufnehmen,
c) mindestens die Lage des Crimpkontakts (30) im Messbereich (53) aus den Bildern (104,105) mittels eines Visionssystems (60) bestimmen,
d) falls gemäss Visionssystem (60) alle vorbestimmten Anforderungen an die Lage des Crimpkontakts (30) erfüllt sind, die Crimphöhe (CH) des Leitercrimps (18.1) taktil mittels relativ zueinander bewegbarer Messtaster (3, 4) messen und
e) falls die Anforderungen an die Lage des Crimpkontakts (30) nicht erfüllt sind, Schritte a) bis c) wiederholen.

12. Verfahren nach Anspruch 11, wobei erst wenn alle vorbestimmten Anforderungen an die Lage des Crimpkontakts (30) erfüllt sind, ein Messsignal für die Crimphöhe (CH) des Leitercrimps (18.1) von der Messvorrichtung (1) generiert wird.

13. Verfahren nach Anspruch 11 oder 12, wobei falls die Anforderungen an die Lage des Crimpkontakts (30) nicht erfüllt sind, eine Messvorrichtung zur taktilen Messung der Crimphöhe (CH) des Leitercrimps (30) automatisch in eine Ruhestellung gestellt wird.

14. Verfahren nach einem der Ansprüche 11 bis 13, wobei jeder Bildpunkt der Bilder je nach Helligkeitswert als Schatten oder als Hintergrund bewertet wird und wobei vertikale und horizontale Linien (100, 101, 102a, 102b, 103a, 103b) sowie ein Koordinatensystem (u, v) über die Bilder gelegt werden zur Auswertung der Lage des Crimpkontakts (30) im Messbereich (53).

15. Verfahren nach Anspruch 14, wobei die Koordinaten auf den Linien der als Schatten bewerteten Bildpunkte bestimmt werden und aus den Koordinaten die Lage des Crimpkontakts (30) bezüglich der Linien bestimmt wird.

16. Verfahren nach Anspruch 14 oder 15, wobei aus den Koordinaten ein Parameter (hopt) des Crimpkontakts (30) bestimmt wird und mit der gemessenen Crimphöhe (CH) des Leitercrimps (30) verglichen wird.

17. Verfahren nach Anspruch 16, wobei der Parameter (hopt, CH) des Crimpkontakts (30) an die den Crimpkontakt (30) herstellende Kabelbearbeitungsmaschine übermittelt wird zur automatischen Einstellung der Maschine.

## Claims

1. A measuring assembly (50) for purposes of determining at least the crimp height (CH) of one conductor crimp (18.1) of a crimped contact (30), consisting of a camera (20) for purposes of acquiring images (104, 105) of the crimped contact (30) in a measurement region (53), and consisting of a vision system (60) equipped for purposes of evaluating the images (104, 105), and for purposes of determining and assessing the location of the crimped contact (30), and consisting of a measuring device (1) connected with the vision system (60) for purposes of tactile measurement of the crimp height (CH) of the conductor crimp (18.1), wherein
the measuring device has measuring probes (3, 4) located opposite one another and can be moved relative to one another by means of an actuator (2), wherein
the measuring probes (3, 4) are configured so as to contact the conductor crimp (18.1) from two sides for purposes of measuring the crimp height (CH).

2. The measuring arrangement (50) in accordance with claim 1, wherein
the vision system (60) comprises an evaluation and comparison device (64), which is equipped for purposes of determining, with the aid of the images (104, 105) acquired by the camera, the ACTUAL location of the crimped contact (30) and comparing the ACTUAL location with a DESIRED location of the crimped contact (30).

3. The measuring arrangement (50) in accordance with claim 1 or 2, wherein
the vision system (60) is programmed such that a measurement of the crimp height (CH) of the conductor crimp (18.1) is undertaken by the measuring device (1) only if all the predetermined requirements regarding the location of the crimped contact (30) are fulfilled.

4. The measuring device (50) in accordance with one of the claims 2 to 3, wherein
the vision system (60) connected with the actuator (2) is programmed such that in the event of the absence of the predetermined requirements regarding the location of the crimped contact (30), that is to say, in the event that the predetermined requirements regarding the location of the crimped contact (30) are not fulfilled, while the conductor crimp (18.1) located in the measuring region (53) is being contacted by the measuring probes (3, 4), the measuring probes (3, 4) automatically move back into a non-operative position.

5. The measuring device (50) in accordance with one of the claims 1 to 4, wherein
a mirror arrangement (51) is provided, with the aid of which various views of the crimped contact (30) can be imaged on the image sensor (20.11) of the camera (20).

6. The measuring arrangement (50) in accordance with claim 5, wherein
the mirror arrangement (51) has a first and a second mirror (10a, 10b) for purposes of imaging the crimped contact (30) from underneath.

7. The measuring arrangement (50) in accordance with claim 6, wherein
the measuring device (1) comprises a blade (4) as a first measuring probe, which interfaces at right angles with the first and second mirrors (10a, 10b) and is arranged between the first and second mirrors (10a, 10b).

8. The measuring arrangement (50) in accordance with claim 6 or 7, wherein
the mirror arrangement (51) furthermore has a third and a fourth mirror (11, 12) for purposes of imaging the crimped contact (30) from the side.

9. The measuring device (50) in accordance with one of the claims 1 to 8, wherein
a form of illumination (52), controllable by means of the vision system (60), is provided for purposes of illuminating the various views.

10. A cable-processing machine with a measuring arrangement (50) in accordance with the claims 1 to 9.

11. A method for determining at least the crimp height (CH) of a conductor crimp (18.1) of a crimped contact (30) in accordance with the following steps:
a) bring the crimped contact (30) into a measuring region (53),
b) acquire images (104, 105) of the crimped contact (30),
c) determine at least the location of the crimped contact (30) in the measuring region (53) from the images (104, 105) by means of a vision system (60),
d) if, in accordance with the vision system (60), all the predetermined requirements regarding the location of the crimped contact (13) are fulfilled, measure the crimp height (CH) of the conductor crimp (18.1) in a tactile manner by means of measuring probes (3, 4) that can be moved relative to one another, and
e) if the requirements on the location of the crimped contact (30) are not fulfilled, repeat steps a) to c).

12. The method in accordance with Claim 11, wherein
a measurement signal for the crimp height (CH) of the conductor crimp (18.1) is only generated by the measuring device (1) if all the predetermined requirements regarding the location of the crimped contact (30) are fulfilled.

13. The method in accordance with Claim 11 or 12, wherein
if the predetermined requirements regarding the location of the crimped contact (30) are not fulfilled, a measuring device for purposes of tactile measurement of the crimp height (CH) of the conductor crimp (30) is automatically set into a non-operative position.

14. The method in accordance with one of the Claims 11 to 13, wherein
each image point of the images is evaluated as a shadow or as background, depending upon its brightness value, and wherein
vertical and horizontal lines (100, 101, 102a, 102b, 103a, 103b), together with a coordinate system (u, v), are overlaid on the images for purposes of evaluating the location of the crimped contact (30) in the measuring region (53).

15. The method in accordance with Claim 14, wherein
the coordinates on the lines of the image points evaluated as shadows are determined, and the location of the crimped contact (30) with respect to the lines is determined from the coordinates.

16. The method in accordance with Claim 14 or 15, wherein
a parameter (hopt) of the crimped contact (30) is determined from the coordinates and compared with the measured crimp height (CH) of the conductor crimp (18.1).

17. The method in accordance with claim 16, wherein
the parameters (hopt, CH) of the crimped contact (30) are transmitted to the cable-processing machine manufacturing the crimped contact (30) for purposes of automatic adjustment of the machine.

## Revendications

1. Dispositif de mesure (50) pour définir au moins la hauteur de sertissage (CH) d'un élément de sertissage pour conducteur (18.1) d'un contact à sertir (30), composé d'une caméra (20) pour enregistrer des images (104, 105) du contact à sertir (30) dans une zone de mesure (53), et composé d'un système de vision (60) installé pour analyser les images (104, 105) et pour définir et évaluer la position du contact à sertir (30), et composé d'un appareil de mesure (1), relié au système de vision (60), pour la mesure tactile de la hauteur de sertissage (CH) de l'élément de sertissage pour conducteur (18.1), l'appareil de mesure (1) comportant des palpeurs de mesure (3, 4) qui se font face et qui sont aptes à être déplacés l'un par rapport à l'autre à l'aide d'un actionneur (2), les palpeurs (3, 4) étant conçus pour venir en contact, par deux côtés, avec l'élément de sertissage pour conducteur (18.1) en vue de la mesure de ladite hauteur de sertissage (CH).

2. Dispositif de mesure (50) selon la revendication 1, dans lequel le système de vision (60) comprend un dispositif d'analyse et de comparaison (64) qui est installé pour déterminer, à l'aide des images (104, 105) enregistrées par la caméra, la position réelle du contact à sertir (30), et pour comparer ladite position réelle à une position théorique du contact à sertir (30).

3. Dispositif de mesure (50) selon la revendication 1 ou 2, dans lequel le système de vision (60) est programmé de telle sorte qu'une mesure de la hauteur de sertissage (CH) de l'élément de sertissage pour conducteur (18.1) ne soit réalisée par le dispositif de mesure (1) qu'une fois que toutes les exigences prédéfinies concernant la position du contact à sertir (30) sont satisfaites.

4. Dispositif de mesure (50) selon l'une des revendications 2 à 3, dans lequel le système de vision (60) relié à l'actionneur (2) est programmé de telle sorte qu'en l'absence des exigences prédéfinies concernant la position du contact à sertir (30) ou au cas où les exigences prédéfinies concernant la position du contact à sertir (30) ne sont pas satisfaites pendant que les palpeurs de mesure (3, 4) viennent en contact avec l'élément de sertissage pour conducteur (18.1) qui se trouve dans la zone de mesure (53), les palpeurs (3, 4) reviennent automatiquement dans une position de repos.

5. Dispositif de mesure (50) selon l'une des revendications 1 à 4, dans lequel il est prévu un dispositif à miroir (51) à l'aide duquel différentes vues du contact à sertir (30) peuvent être reproduites sur un capteur d'image (20, 11) de la caméra (20).

6. Dispositif de mesure (50) selon la revendication 5, dans lequel le dispositif à miroir (51) comporte des premier miroir et deuxième miroirs (10a, 10b) pour reproduire par-dessous le contact à sertir (30).

7. Dispositif de mesure (50) selon la revendication 6, dans lequel l'appareil de mesure (1) comprend une lame (4), comme premier palpeur, qui fait suite à angle droit aux premier et deuxième miroirs (10a, 10b) et qui est disposée entre les premier et deuxième miroirs (10a, 10b).

8. Dispositif de mesure (50) selon la revendication 6 ou 7, dans lequel le dispositif à miroir (51) comporte également des troisième et quatrième miroirs (11, 12) pour la reproduction, de côté, du contact à sertir (30).

9. Dispositif de mesure (50) selon l'une des revendications 1 à 8, dans lequel il est prévu un éclairage (52) apte à être commandé à l'aide du système de vision (60), pour éclairer les différentes vues.

10. Machine de traitement de câbles avec un dispositif de mesure (50) selon les revendications 1 à 9.

11. Procédé pour définir au moins la hauteur de sertissage (CH) d'un élément de sertissage pour conducteur (18.1) d'un contact à sertir (30) selon les étapes suivantes :
a) amener le contact à sertir (30) dans une zone de mesure (53),
b) enregistrer des images (104, 105) du contact à sertir (30),
c) définir au moins la position du contact à sertir (30) dans la zone de mesure (53), à partir des images (104, 105) et à l'aide d'un système de vision (60),
d) au cas où selon le système de vision (60) toutes les exigences prédéfinies concernant la position du contact à sertir (30) sont satisfaites, mesurer la hauteur de sertissage (CH) de l'élément de sertissage pour conducteur (18.1) de manière tactile à l'aide de palpeurs de mesure (3, 4) aptes à être déplacés l'un par rapport à l'autre
e) au cas où les exigences concernant la position du contact à sertir (30) ne sont pas satisfaites, répéter les étapes a) à c).

12. Procédé selon la revendication 11, un signal de mesure pour la hauteur de sertissage (CH) de l'élément de sertissage pour conducteur (18.1) n'étant généré qu'une fois que toutes les exigences prédéfinies concernant la position du contact à sertir (30) sont satisfaites.

13. Procédé selon la revendication 11 ou 12, un dispositif de mesure pour la mesure tactile de la hauteur de sertissage (CH) de l'élément de sertissage pour conducteur (18.1), au cas où les exigences concernant la position du contact à sertir (30) ne sont pas satisfaites, étant amené automatiquement dans une position de repos.

14. Procédé selon l'une des revendications 11 à 13, chaque point d'image des images étant évalué comme ombre ou comme fond, suivant la valeur de luminance, et des lignes verticales et horizontales (100, 101, 102a, 102b, 103a, 103b) et un système de coordonnées (u, v) étant placés sur les images, en vue de l'analyse de la position du contact à sertir (30) dans la zone de mesure (53).

15. Procédé selon la revendication 14, les coordonnées étant définies sur les lignes des points d'image évalués comme ombres, et la position du contact à sertir (30) étant définie par rapport aux lignes, à partir des coordonnées.

16. Procédé selon la revendication 14 ou 15, un paramètre (hopt) du contact à sertir (30) étant défini à partir des coordonnées et étant comparé à la hauteur de sertissage (CH) mesurée de l'élément de sertissage pour conducteur (30).

17. Procédé selon la revendication 16, le paramètre (hopt, CH) du contact à sertir (30) étant transmis à la machine de traitement de câbles qui fabrique ledit contact à sertir (30), en vue d'un réglage automatique de la machine.
